(19) Europäisches Patentamt / European Patent Office / Office européen des brevets

(11) **EP 2 056 216 A1**

(12) **EUROPEAN PATENT APPLICATION**

(43) Date of publication:
**06.05.2009 Bulletin 2009/19**

(51) Int Cl.:
***G06F 17/30*** (2006.01)

(21) Application number: **08104689.8**

(22) Date of filing: **09.07.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **S.A.I. New Technologies (Patents) Limited**
**County Limerick (IE)**

(72) Inventor: **Whelan, Martin**
**County Clare (IE)**

(74) Representative: **Schütte, Gearoid et al**
**Cruickshank & Co.**
**Unit 8A Sandyford Business Centre**
**Sandyford**
**Dublin 18 (IE)**

(54) **A three-tiered network architecture**

(57) The present invention concerns a three-tiered network architecture used for increasing the adaptability of a processing network and reducing the computational complexity of the processing network. Prior art systems have integrated too many of the functions of the system into a large central processing system. This large central processing system has then become unwieldy to manage and to update to be compliant with new data formats due to the need to re-programme and re-compile the entire central processing system. Data that requires manipulation prior to transmission between programs is manipulated in a stand-alone data connection unit. These data connection units can be used in conjunction with a central processing system to provide an easily adaptable system in which any new data formats are taken care of with a new data connection unit and the existing central processing system. It is far easier to program a new data connection unit than to re-program the large central processing system.

Fig. 2

**Description**

<u>Introduction</u>

The present invention is directed to a method for increasing the technical adaptability of a processing network and reducing the computational complexity of the processing network.

Throughout the following specification, the term "disparate processing sub-systems" shall be understood to define processing systems having different, incompatible formats.

Throughout the following specification, the term "operation characteristics" shall be understood to incorporate a plurality of characteristics such as the range and type of data processing functions performed by the processing system, the data input to the system and/or the data output from the system.

Computers are increasingly forming part of everyday life and can be found in a variety of common-place products. As more and more of these common-place products become computerised, the number and diversity of the different computing processing systems has increased. It is desirable to centralise these disparate processing systems under a common processing system, so as to have one central access point to control all of the disparate sub-systems.

A common example relates to the manufacture of a simple part from a cast metal component requiring heat treatment, machining, polishing, painting and packaging. Each of the above stages of a production line in a factory may comprise their own processing system to control and monitor the operation of that stage. Although the processing system of each stage processes data necessary for the operation of that stage, the overall control of the production line may only depend on some of the processed data from each stage (e.g. only the throughput speed).

It has been known to create a bespoke centralised system to replace all of the individual stage sub-systems. The bespoke system controls and monitors each of the processing systems of each stage and controls/monitors the overall system.

Alternatively, a central system can be created to work in tandem with the existing stage sub-systems as opposed to replacing them. Until now, prior art systems have facilitated such a tandem operating structure by transferring data between the central processing system and the stage sub-systems. The transfer of data from the sub-systems to the central system is implemented by transferring all of the data from the database of the stage sub-system to the database of the central processing system, and allowing the central processing system to access and process the data in the central processing system database. These prior art system architectures are structured to form a two tiered network.

The problem with bespoke central systems is that the creation of the systems is arduous, complex and generally impractical. The central system needs to be capable of performing all of the operations performed by each of the stage sub-systems in addition to the operations that are unique to the central processing system, and a new system needs to be created every time a stage sub-system is altered, removed or added.

For the central system operating in tandem with sub-systems, a further problem exists. As the entire dataset of sub-system data in the sub-system database is transferred to the central database, the data transfer is time-consuming and inefficient, particularly if only some of the data from the dataset is needed to be processed by the central processing system.

Furthermore, the addition of a sub-system will still require a new central processing system to be created to replace the existing central processing system. The creation of a new replacement central processing system would not be as complicated as the creation of a bespoke system mentioned above, however, it will nevertheless be time consuming to develop.

It is a goal of the present invention to provide an apparatus/method that overcomes at least one of the above mentioned problems.

**Summary of the Invention**

The present invention is directed to a method for increasing the technical adaptability of a processing network and reducing the computational complexity of the processing network by processing data in the data processing network using a tiered structure, the network comprising a central processing system (CPS) on an upper tier which is used to process central input data provided from a plurality of disparate processing sub-systems situated on a lower tier; each disparate processing sub-system having an associated processor and database; the central processing system performing the processing of the central input data independently of the processors of the processing sub-systems; the network further comprising a plurality of data connection units (DCU) on an intermediate tier, each data connection unit being used to retrieve sub-system data from a database of a processing sub-system, process the sub-system data into central input data and transfer the central input data to the central processing system from the associated processing sub-system; the method initially comprising the steps of: a data requirement analysis step wherein the central processing system establishes which central input data is needed to perform each target operation from a plurality of different types of target operations, and, in which predetermined format the central input data needs to be; a polling step wherein each sub-system is polled to establish whether it can provide the sub-system data needed to generate the central input data in the predetermined format needed for the target operation; an initial DCU creation step wherein a data connection unit is created for each processing sub-system which is capable of retrieving and processing sub-system data from its associated processing sub-system to provide central input data to the CPS; a collation step wherein the central processing system collates the results of the polling step into a library of information representing which target operations are possible with which sub-systems; wherein, upon the central processing system needing to perform a specific target operation, a data request step wherein the central processing system requests the associated DCU of a selected processing sub-system to transfer the central input data, in the predetermined format, so that the specified target operation can be performed; a data determination step wherein the DCU determines which sub-system data fields are required to be accessed in order to provide the requested central input data; a database freezing step wherein the selected processing sub-system inhibits any data from being written to the required sub-system data fields in the processing sub-system database by freezing the required sub-system data fields; a data retrieval step wherein the associated data connection unit accesses the frozen database of the selected processing sub-system and retrieves the required sub-system data necessary to transfer the required data in the predetermined format; a database unfreezing step wherein the selected processing sub-system permits data to be written to the required sub-system fields in the processing sub-system database by unfreezing the required sub-system fields; a data transfer step wherein the associated data connection unit processes and transfers the retrieved data to the central processing system in the form of the required central input data; and, a data processing step wherein the central processing system receives and processes the central input data to produce central output data.

There are numerous advantages of providing a three-tier architecture (a bottom sub-system tier, an intermediate data connection unit tier and a top central processing system tier) as opposed to a two-tier architecture (a sub-system tier and a central processing system tier) as is known from the prior art.

From the point of view of a processing system developer, a new sub-system will no longer require a new central processing system to be developed. A developer may simply create a new data connection unit that is suitable for retrieving and processing data intermediate the new sub-system and the central processing system. The developer knows which central input data fields the central processing system will be requesting, and the developer also knows which sub-system data values are available from the new sub-system, therefore the developer can create an appropriate data connection unit based on the knowledge of the available data/data format (sub-system data) and the required data/data format (central input data).

Often, the new sub-systems will be upgrades of existing sub-systems. Therefore, the creation of a new data connection unit does not need to be done from scratch on each occasion. The existing sub-systems may be grouped based on similar operation characteristics. In practice, this grouping will normally be based on the sub-systems offering the same functionality or being produced by the same manufacturer. A new sub-system will be allocated to a group based on its operation characteristics. As data connection units will have been developed for the existing sub-systems in the group, the new data connection unit can be developed by using one of the existing data connection units as a starting point and adjusting this data connection unit to form the new data connection unit. This method of creating a data connection unit allows a quick and relatively inexpensive upgrade to be achieved without altering the central processing system in any manner.

The central processing system is not modified in any manner whilst numerous data connection units are developed to deal with new sub-systems. This can be advantageous as the central system will generally be far more complex than the data connection units, and any adjustment to the central processing system would be far more complex and time-consuming than adjustments to data connection units. The central processing system is therefore sub-system-independent.

Similarly, the creation of a new central processing system may not require new data connection units to be developed. A replacement central processing system need only check what central input data is required to perform a target operation, and then check whether each sub-system can supply the appropriate sub-system data in the correct format or in a format which can be processed into the correct format, which can be processed into the required central input data.

From the point of view of the central processing system, the data connection unit allows the central processing system to treat the database of the sub-system as a virtual memory. The data connection unit does not transfer the entire dataset from the sub-system database to the central processing system database. The data connection unit only retrieves the sub-system data which is needed in order to produce the central input data required by the central processing system to perform a target operation. Therefore, far less memory is needed by the central processing system as far less data is transferred on each occasion.

Furthermore, far fewer operations need to be performed during the transfer of the data. Previously, the entire dataset was accessed and written from the sub-system database to a central processing system database. The necessary data values to perform a target operation were then read from the central processing system database for further processing by the central processing system. In the present invention, only the data required to perform the target operation in the central processing system is transferred. The central input data is presented to the central processing system in a predetermined format. The data connection unit may retrieve the sub-system data in the correct predetermined format, if it exists, and simply forward the sub-system data as central input data to be received by the central processing system.

Alternatively if the sub-system data does not exist in the correct predetermined format, then the data connection unit may retrieve a plurality of sub-system data values and process these values to arrive at a central input value in the correct predetermined format.

During the retrieval of the plurality of sub-system data values from the sub-system database, it is imperative that the sub-system data fields being accessed in the database are frozen to prevent sub-system data being written to the sub-system database during the retrieval process as this could alter the proportionality of the relative data values and hence skew the result. For example, if two data fields, X and Y, are needed to produce data field Z, then it is important that both X and Y are retrieved at the same time so as to produce an accurate result for Z. If Y was updated between retrieving X and retrieving Y, then the result for Z would be based on $X_{old}$ and $Y_{new}$, which would skew the result for Z.

It can be clearly seen that the use of data connection units between the sub-systems and the central processing system is advantageous for both the developer and the user of the central system, as all of the above problems are solved by the three-tier, compartmentalised architecture.

In a further embodiment, upon the introduction of a new sub-system into the network, the method comprises the steps of: a grouping step wherein each of the plurality of disparate processing sub-systems are grouped in accordance with their operation characteristics; a scanning step wherein the network is scanned for the presence of a newly introduced processing sub-system; a sub-system analysis step wherein, upon detection of the newly introduced processing sub-system, it is determined whether the new processing sub-system is similar to a known group of sub-systems; an allocation step wherein the new processing sub-system is allocated to an existing known group if the new processing sub-system is similar to that known group, otherwise, a new group is created and the new processing sub-system is allocated to the newly created group; a subsequent DCU creation step wherein, upon allocation to an existing group of sub-systems, differences between the newly introduced processing sub-system and each of the other processing sub-system group members are determined, and, a new DCU is created, based on the determined differences, which is capable of retrieving and processing sub-system data from the new processing sub-system to provide central input data to the CPS, otherwise, a new DCU is created which is capable of retrieving and processing sub-system data from the new processing sub-system to provide central input data to the CPS.

In another embodiment, the subsequent DCU creation step further comprises: a library access step wherein, upon allocation of the new sub-system to an existing group of sub-systems, a library of existing data connection units is accessed, whereby each of the accessed existing data connection units is associated with one of the existing sub-systems in the group; a selection step wherein, based on the determined differences between the new sub-system and the existing group member sub-systems, one of the existing data connection units is selected as the closest data connection unit; an adaptation step wherein the closest data connection unit is adapted to retrieve and process sub-system data from the new processing sub-system to provide central input data to the CPS.

In still another embodiment, upon upgrading an existing central processing system with a replacement central processing system in the network, the method further comprises the steps of: an upgrade data requirement analysis step wherein the replacement central processing system establishes which central input data is needed to perform each target operation from a plurality of different types of target operations, and, in which predetermined format the central input data needs to be; an upgrade polling step wherein each existing sub-system is polled by the replacement central processing system to establish whether it can provide the sub-system data needed to generate the central input data in the predetermined format needed for the target operation; an upgrade collation step wherein the replacement central processing system collates the results of the polling step into a library of information representing which target operations are possible with which sub-systems replacement central processing system collating the results of the polling each data connection unit into a library of information representing the data required from each processing sub-system to carry out each operation; wherein the substitution of the central processing system with the replacement central processing system does not affect the operation of the processing sub-systems nor the data connection units.

## Detailed Description of Embodiments

The invention will be more clearly understood by the following description of some embodiments thereof, given by way of example only with reference to the accompanying drawings, in which:

Fig. 1 is a flow chart representation of a data processing method according to the prior art; and,

Fig. 2 is a flow chart representation of a data processing method according to the present invention.

The present invention is directed to a solution that compartmentalises and separates the central system functional operations from the central system data connection operations by means of an intermediate data connection unit. This forms a three tier network architecture where previously there was a two tier architecture. The data connection unit can be used to receive a data request from the central processing system and retrieve the correct sub-system data from the sub-system database. The data connection unit acts as a buffer, connecting the central processing system to the sub-system unit.

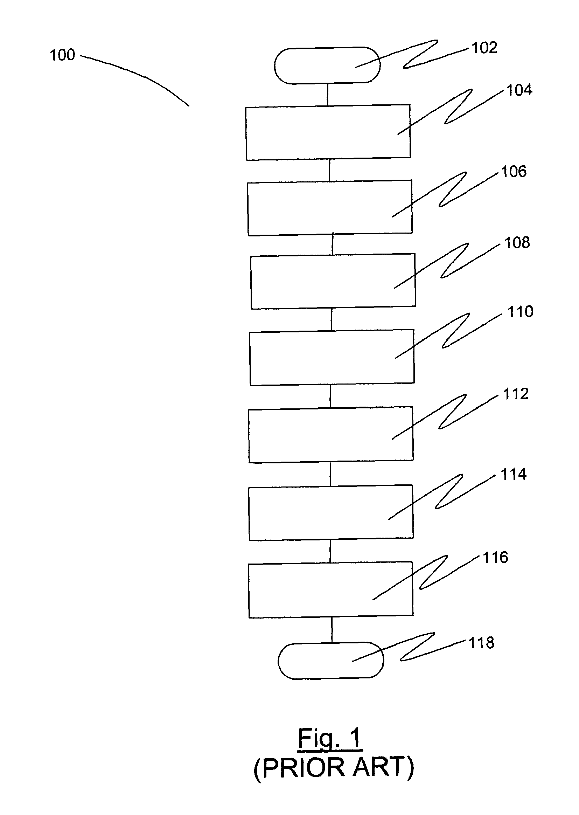

Referring to Fig. 1, there is provided a flowchart indicated generally by reference numeral 100 comprising a plurality of steps 102-118 which define the actions needed to be performed in prior art two tier systems in order to transfer sub-system data from a sub-system database to be processed by a central processing system as central input data. The process begins at step 102. In step 104, the central processing system determines which central input data is required to perform a target operation in the central processing system. The central processing system requests this data in step 106. In step 108, the sub-system accesses its database to retrieve the entire dataset of sub-system data from the sub-system database.

The entire dataset of sub-system data in the sub-system database is copied from the sub-system database to the central system database in step 110. In step 112, the central processing system stores all of the sub-system data as central input data in the central input database. The conversion from sub-system data to central input data may be as simple as readdressing and reorganising the structure of the sub-system data values to become central input data. In further examples, the conversion to central input data may require that the sub-system data is processed with other sub-system data values to provide a result which is addressed as the central input data value.

In step 114, the central processing system accesses the central system database and retrieves the central input data necessary to perform the target operation. And in step 116, the central processing system processes the retrieved central input data to perform the target operation. The process 100 as shown in Fig. 1 terminates at step 118, however, it will be appreciated that the result of the target operation may be used in further steps by the central processing system and/or the sub-system if the result is sent from the central processing system to the sub-system.

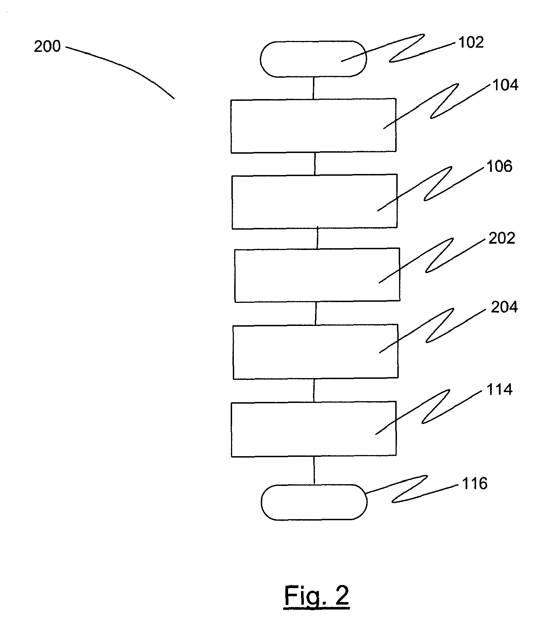

Referring to Fig. 2, there is provided a flowchart indicated generally by reference numeral 200 comprising a plurality of steps 102-106, 202, 204, 114, 116 that define the actions needed to be performed in the system of the present invention to transfer sub-system data from a sub-system database to be processed by a central processing system as central input data. Similar steps to those previously described have been allocated the same reference numerals. The process begins at step 102. The central processing system determines which central input data is required to perform the target operation in step 104. The central processing system requests this data in step 106. In step 202, the data connection unit (DCU) accesses the sub-system database to retrieve only the required sub-system data to perform the target operation. The sub-system data is processed into central input data by the DCU and sent to the central processing system in step 204. In step 114, the central processing system processes the retrieved central input data to perform the target operation. The process 200 terminates at step 118.

In a further example, the central processing system may require data values for 'total_working_hours, 'machinery_downtime' and 'quantity_of_product_produced' from each sub-system in the production line so that the central processing system can determine the overall 'productivity_factor' of the production line by the equation:

$$productivity\_factor = \frac{(total\_working\_hours) - (machinery\_downtime)}{(quantity\_of\_product\_produced)}$$

However, some of the sub-systems may only be able to provide 'total_working_minutes'. The data connection unit can process the sub-system data, in the form of 'total_working_minutes' to produce the required central input data, in the form of 'total_working_hours', by performing a simple division by 60. The sub-system will now be in the correct format and will be sent on by the data connection unit to the central processing system.

Alternatively, the data connection unit may retrieve a plurality of different sub-system data values and process the values with one another to produce a resultant data value, which is transferred to the central processing system as central input data.

The data connection units are used as a link between the central processing system and the sub-systems. The data connection units remove the system operations responsible for the data connection between the central processing system and the sub-systems, from the central processing system. The data connection units sit between the central processing system and the sub-systems in a three tier architecture.

Whilst it may appear obvious it provide the above-mentioned solutions in light of the stated problems, it would be argued that that the provision of all of the solutions as a result of the three tier architecture is not obvious.

The separation of a centralised system into a central processing system, to perform central system functions, and a plurality of data connection units, to perform data transfer functions, is illogical as the aim is to provide a central system to monitor and control sub-systems. The separation and compartmentalisation of functions into separate processing units is opposite to centralising the functions and processing into one large central system.

However, it is this compartmentalised, three-tier architecture which provides solutions to the known problems of prior art systems. The inventiveness of the invention lies in both the illogical step of de-centralising a centralised system to provide a more efficient central processing system, and, in the simplicity of the three-tier architecture which has so many advantages.

It will be readily appreciated that the above description has been primarily directed towards a central processing system for a manufacturing line or plant. However, the three-tiered system may be equally applied to any system architecture requiring the transfer of data between sub-systems and a central processing system, for example, personnel information between systems in human resource departments, financial information between different accounting systems, or control data between sub-systems on an aircraft.

In the specification the terms "comprise, comprises, comprised and comprising" or any variation thereof and the terms "include, includes, included and including" or any variation thereof are considered to be totally interchangeable and they should all be afforded the widest possible interpretation and vice versa.

The invention is not limited to the embodiments hereinbefore described which may be varied in both construction and detail with the scope of the appended claims.

## Claims

1. A method for increasing the technical adaptability of a processing network and reducing the computational complexity of the processing network,

   the method comprising processing data in the data processing network using a tiered structure, the network comprising a central processing system (CPS) on an upper tier which is used to process central input data provided from a plurality of disparate processing sub-systems situated on a separate independent lower tier and an intermediate tier to link the upper tier to the lower tier;

   each disparate processing sub-system having an associated processor and database;

   the central processing system performing the processing of the central input data independently of the processors of the processing sub-systems;

   the network further comprising a plurality of data connection units (DCU) on the intermediate tier, each data connection unit being used to retrieve sub-system data from a database of a processing sub-system, process the sub-system data into central input data and transfer the central input data to the central processing system from the associated processing sub-system;

   the method comprising the initial set-up steps of:

       i) a data requirement analysis step wherein the central processing system establishes which central input data is needed to perform each target operation from a plurality of different types of target operations, and, in which predetermined format the central input data needs to be;

       ii) a polling step wherein each sub-system is polled to establish whether it can provide the sub-system data needed to generate the central input data in the predetermined format needed for the target operation;

       iii) an initial DCU creation step wherein a data connection unit is created for each processing sub-system which is capable of retrieving and processing sub-system data from its associated processing sub-system to provide central input data to the CPS;

       iv) a collation step wherein the central processing system collates the results of the polling step into a library of information representing which target operations are possible with which sub-systems;

   wherein, upon the central processing system needing to perform a specific target operation, the following operation steps are performed:

       a) a data request step wherein the central processing system requests the associated DCU of a selected processing sub-system to transfer the central input data, in the predetermined format, so that the specified target operation can be performed;

       b) a data determination step wherein the DCU determines which sub-system data fields are required to be accessed in order to provide the requested central input data;

       c) a database freezing step wherein the selected processing sub-system inhibits any data from being written to the required sub-system data fields in the processing sub-system database by freezing the required sub-system data fields;

d) a data retrieval step wherein the associated data connection unit accesses the frozen database of the selected processing sub-system and retrieves the required sub-system data necessary to transfer the required data in the predetermined format;

e) a database unfreezing step wherein the selected processing sub-system permits data to be written to the required sub-system fields in the processing sub-system database by unfreezing the required sub-system fields;

f) a retrieved data processing step wherein the associated data connection unit optionally processes the retrieved data into the form of the required central input data;

g) a data transfer step wherein the associated data connection unit transfers the retrieved and optionally processed data to the central processing system in the form of the required central input data; and,

h) a central data processing step wherein the central processing system receives and processes the central input data to produce central output data.

2. A method for increasing the technical adaptability of a processing network and reducing the computational complexity of the processing network according to claim 1, wherein, upon the introduction of a new sub-system into the network, the method further comprises the set-up steps of:

I) a grouping step wherein each of the plurality of disparate processing sub-systems are grouped in accordance with their operation characteristics;

II) a scanning step wherein the network is scanned for the presence of a newly introduced processing sub-system;

III) a sub-system analysis step wherein, upon detection of the newly introduced processing sub-system, it is determined whether the new processing sub-system is similar to a known group of sub-systems;

IV) an allocation step wherein the new processing sub-system is allocated to an existing known group if the new processing sub-system is similar to that known group, otherwise, a new group is created and the new processing sub-system is allocated to the newly created group;

V) a subsequent DCU creation step wherein, upon allocation to an existing group of sub-systems, differences between the newly introduced processing sub-system and each of the other processing sub-system group members are determined, and, a new DCU is created, based on the determined differences, which is capable of retrieving and processing sub-system data from the new processing sub-system to provide central input data to the CPS, otherwise, a new DCU is created which is capable of retrieving and processing sub-system data from the new processing sub-system to provide central input data to the CPS.

3. A method for increasing the technical adaptability of a processing network and reducing the computational complexity of the processing network according to claim 2, wherein,
the subsequent DCU creation step further comprises:

VI) a library access step wherein, upon allocation of the new sub-system to an existing group of sub-systems, a library of existing data connection units is accessed, whereby each of the accessed existing data connection units is associated with one of the existing sub-systems in the group;

VII) a selection step wherein, based on the determined differences between the new sub-system and the existing group member sub-systems, one of the existing data connection units is selected as the closest data connection unit;

VIII) an adaptation step wherein the closest data connection unit is adapted to retrieve and process sub-system data from the new processing sub-system to provide central input data to the CPS.

4. A method for increasing the technical adaptability of a processing network and reducing the computational complexity of the processing network according to claim 1, wherein, upon upgrading an existing central processing system with a replacement central processing system in the network, the method further comprises the initial upgrading steps of:

1) an upgrade data requirement analysis step wherein the replacement central processing system establishes which central input data is needed to perform each target operation from a plurality of different types of target operations, and, in which predetermined format the central input data needs to be;

2) an upgrade polling step wherein each existing sub-system is polled by the replacement central processing system to establish whether it can provide the sub-system data needed to generate the central input data in the predetermined format needed for the target operation;

3) an upgrade collation step wherein the replacement central processing system collates the results of the polling step into a library of information representing which target operations are possible with which sub-systems replacement central processing system collating the results of the polling each data connection unit into a library of information representing the data required from each processing sub-system to carry out each operation;

wherein the substitution of the central processing system with the replacement central processing system does not affect the operation of the processing sub-systems nor the data connection units.

100

102

104

106

108

110

112

114

116

118

Fig. 1
(PRIOR ART)

**Fig. 2**

Europäisches
Patentamt
European
Patent Office
Office européen
des brevets

# EUROPEAN SEARCH REPORT

Application Number

EP 08 10 4689

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/213722 A1 (STORMON CHARLES D [US] ET AL) 29 September 2005 (2005-09-29) * paragraph [0013] * * paragraph [0030] - paragraph [0033] * ----- | 1-4 | INV. G06F17/30 |
| X | US 6 718 336 B1 (SAFFER JEFFREY D [US] ET AL) 6 April 2004 (2004-04-06) * abstract * * column 6, line 35 - column 7, line 59 * ----- | 1-4 | |
| A | US 2002/165724 A1 (BLANKESTEIJN BARTUS C [NL]) 7 November 2002 (2002-11-07) * the whole document * ----- | 1-4 | |
| A | EP 1 420 350 A (HITACHI LTD [JP]) 19 May 2004 (2004-05-19) * the whole document * ----- | 1-4 | |
| A | US 6 529 921 B1 (BERKOWITZ BRIAN T [US] ET AL) 4 March 2003 (2003-03-04) * the whole document * ----- | 1-4 | TECHNICAL FIELDS SEARCHED (IPC) G06F |

The present search report has been drawn up for all claims

| Place of search | Date of completion of the search | Examiner |
|---|---|---|
| The Hague | 9 December 2008 | Dewyn, Torkild |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

& : member of the same patent family, corresponding
  document

EPO FORM 1503 03.82 (P04C01)

## ANNEX TO THE EUROPEAN SEARCH REPORT
## ON EUROPEAN PATENT APPLICATION NO.

EP 08 10 4689

This annex lists the patent family members relating to the patent documents cited in the above-mentioned European search report.
The members are as contained in the European Patent Office EDP file on
The European Patent Office is in no way liable for these particulars which are merely given for the purpose of information.

09-12-2008

| Patent document cited in search report | | Publication date | Patent family member(s) | | Publication date |
|---|---|---|---|---|---|
| US 2005213722 | A1 | 29-09-2005 | EP 1738573 A2 | | 03-01-2007 |
| | | | WO 2005069898 A2 | | 04-08-2005 |
| US 6718336 | B1 | 06-04-2004 | AU 9640801 A | | 08-04-2002 |
| | | | WO 0227533 A1 | | 04-04-2002 |
| US 2002165724 | A1 | 07-11-2002 | NONE | | |
| EP 1420350 | A | 19-05-2004 | JP 4136615 B2 | | 20-08-2008 |
| | | | JP 2004164401 A | | 10-06-2004 |
| | | | US 2004098417 A1 | | 20-05-2004 |
| | | | US 2007143362 A1 | | 21-06-2007 |
| US 6529921 | B1 | 04-03-2003 | US 2003105768 A1 | | 05-06-2003 |
| | | | US 2003172054 A1 | | 11-09-2003 |

EPO FORM P0459

For more details about this annex : see Official Journal of the European Patent Office, No. 12/82